Europäisches Patentamt

European Patent Office

Office européen des brevets

(11) Veröffentlichungsnummer: **0 502 338 A1**

## (12) EUROPÄISCHE PATENTANMELDUNG

(21) Anmeldenummer: **92102288.5**

(22) Anmeldetag: **12.02.92**

(51) Int. Cl.5: **F16L 55/26**

(30) Priorität: **02.03.91 DE 4106699**

(43) Veröffentlichungstag der Anmeldung:
**09.09.92 Patentblatt 92/37**

(84) Benannte Vertragsstaaten:
**AT BE CH DE DK ES FR GB IT LI NL SE**

(71) Anmelder: **GERHARD KOPP GmbH**
**Friedrich-Ebert-Strasse 131**
**W-4450 Lingen 1(DE)**

(72) Erfinder: **Piotrowitz, Jürgen Dipl.-Ing.**
**Stodtbrochstrasse 12**
**W-4450 Lingen (Ems)(DE)**

(74) Vertreter: **Busse & Busse Patentanwälte**
**Postfach 1226 Grosshandelsring 6**
**W-4500 Osnabrück(DE)**

(54) **Kunststoffmanschette oder -scheibe sowie Verfahren und Vorrichtung zu deren Herstellung.**

(57) Die Erfindung bezieht sich auf eine Kunststoffmanschette oder -scheibe (8) für Molche und dgl. in Rohrleitungen gleitend bewegliche Körper, die im wesentlichen aus einem Polyurethan bestehen und ringförmig an der Rohrinnenseite abgestützt sind. Um insbesondere derartige an Molchen befindliche Stützelemente gegen Reibbelastungen widerstandsfähiger zu machen und deren Gleiteigenschaften zu verbessern, weisen die am Molch befindlichen Kunststoffmanschetten oder -scheiben zur Bildung einer abriebfesten Gleitschicht (11) zumindest in einem zur Anlage an die Rohrleitung bestimmten Außenbereich Einlagerungen von Partikeln aus einem verfestigten Polyäthylen auf.

Fig. 2

EP 0 502 338 A1

Die Erfindung bezieht sich auf eine Kunststoffmanschette oder -scheibe gemäß dem Oberbegriff des Anspruchs 1 sowie auf ein Verfahren zur Herstellung einer solchen Kunststoffmanschette oder -scheibe gemäß dem Oberbegriff des Anspruchs 6. Ferner bezieht sich die Erfindung auf eine Vorrichtung zur Herstellung einer Kunststoffmanschette oder -scheibe gemäß dem Oberbegriff des Anspruchs 11.

Es ist bekannt, Kunststoffmanschetten oder -scheiben für Molche und dgl. in Rohrleitungen gleitend bewegliche Körper aus Polyurethan herzustellen, wobei das vernetzbare Material in einer Form vergossen wird, die der beabsichtigten Endform, im konkreten Falle der Manschetten- oder Scheibenform, weitestgehend entspricht. Beim Einsatz dieser Kunststoffmanschetten oder -scheiben als Teile von Molchen und dgl. in Rohrleitungen gleitend bewegliche Körper sind die Randbereiche der Manschette bzw. Scheibe großen Reibbelastungen ausgesetzt und stellen bei hohen Forderungen an die Dichtheit dieser Gleitflächen eine Schwachstelle dar. Bei Molchen in Rohrleitung, insbesondere im off-shore-Bereich, sind jedoch oft Rohrabschnitte von 50 km, 100 km und mehr in einem Zuge zu durchlaufen, was extreme Anforderungen an die Manschetten und Scheiben stellt. Eine kurze Standzeit dieser Molchscheiben und Manschetten erhöht also nicht nur den Regenerierungsaufwand und verursacht nachteilige Materialkosten, sie führt in besonderen Anwendungsfällen sogar zum Versagen des Molchs. Bei zu hohem Reibwiderstand an den Gleitflächen erhöht sich außerdem der Energieaufwand zur Bewegung der gleitfähigen Körper in vielen Anwendungsfällen nachteilig.

Der Erfindung liegt die Aufgabe zugrunde, eine Kunststoffmanschette oder -scheibe zu schaffen, die ohne konstruktiven Mehraufwand gegen Reibbelastungen widerstandsfähiger ist, hohe Lauflängen erzielt und verbesserte Gleiteigenschaften aufweist. Ferner liegt ihr die Aufgabe zugrunde, ein einfaches Verfahren zur Herstellung besonders verschleißfester Kunststoffmanschetten oder -scheiben sowie eine Vorrichtung zu schaffen, die mit geringem Aufwand eine Herstellung der Manschetten in Gießformen ermöglicht.

Die Erfindung löst diese Aufgabe durch eine Kunststoffmanschette oder -scheibe gemäß Anspruch 1, ein Verfahren gemäß Anspruch 6 und eine Vorrichtung gemäß Anspruch 11. Hinsichtlich wesentlicher weiterer Ausgestaltungen wird auf die Ansprüche 2 bis 5, 8 bis 10, sowie 12 und 13 verwiesen.

Die Erfindung schafft eine Kunststoffmanschette oder -scheibe, die besonders gegen abrasive Belastungen widerstandsfähig ist, wobei eine abriebfeste Gleitschicht zumindest in einem zur Anlage an die Rohrleitung bestimmten Außenbereich homogener Bestandteil der Manschette oder Scheibe ist. Die Kunststoffmanschette oder -scheibe wird in einfachster Ausführung insgesamt aus einem Polyurethan hergestellt, in dem Einlagerungen von Partikeln aus vorbehandeltem bzw. verfestigtem Polyäthylen als organische Schmierstoffaddition enthalten sind, so daß in der gebildeten Gleitschicht im Außenbereich der Kunststoffmanschette oder -scheibe bei der Verschiebung an der Innenseite von beispielsweise Rohrleitungen ein verminderter Reibwert bewirkt ist und die Kunststoffmanschette oder -scheibe insgesamt eine höhere Standzeit erreicht. In besonderer Ausgestaltung besteht die Manschette oder -scheibe aus zwei stoffschlüssig ineinander übergehenden Polyurethanringen, von denen nur der äußere über die volle Wandstärke mit den Einlagerungen der Polyäthylenpartikel versehen ist. Damit wird mit anforderungsgerechtem Materialaufwand eine effektive Gleitschicht erreicht, wobei die guten Festigkeitseigenschaften des Erzeugnisses erhalten bleiben.

Mit dem erfindungsgemäßen Verfahren können auf besonders einfache Art und Weise zwei unterschiedliche Materialien derart miteinander vergossen werden, daß die mit Einlagerungen von Partikeln aus einem vorbehandeltem bzw. verfestigtem Polyäthylen versehene Polyurethanschicht als Gleitschicht im Außenbereich der Kunststoffmanschette oder -scheibe verbleibt und mit dem anderen zusatzfreien Polyurethan eine stoffschlüssige Verbindung eingeht. Dazu erfolgt ein Gießen der beiden unterschiedlichen Polyurethanmaterialien in der gleichen Gießform, wobei die Verfüllung der Polyurethanmaterialien nacheinander oder gleichzeitig erfolgen kann. Eine dabei geschaffene Verbindungszone zwischen den beiden Polyurethanmaterialien wird insbesondere dadurch erreicht, daß vor Erreichen einer Gelzeit beide Materialien in Berührung kommen, so daß eine teilweise Vermischung bzw. Vernetzung in einem Übergangsbereich eintritt.

Das Vergießen der beiden Polyurethanmaterialien kann noch beschleunigt werden, indem diese beiden Polyurethanmaterialien gleichzeitig vergossen werden. Dabei sind in der Form entsprechende Sperrelemente anzuordnen, die eine sofortige Vermischung der beiden Polyurethanmaterialien zumindest während des Eingießvorganges vermeiden. Vor Erreichen der Gelzeiten der beiden Polyurethanmaterialien werden diese Sperrelemente wieder entfernt, so daß danach eine homogene Verbindung der zuvor getrennten Phasen erfolgen kann und eine beabsichtigte Endform erreicht wird.

Eine vorteilhafte Ausgestaltung der erfindungsgemäß erzeugten Kunststoffmanschetten oder -scheiben wird dann erreicht, wenn das mit den verfestigten Polyäthylenpartikeln versehene Polyurethan um einen ausgehärteten Kern, der insbesondere von einer abgenutzten Manschette oder Scheibe gebildet sein kann, vergossen wird. Damit können materialsparende Regenerierungen einhergehen bzw. regenerierungsfähige Manschetten oder Scheiben erzeugt werden.

Mit der erfindungsgemäßen Vorrichtung zur Herstellung einer Kunststoffmanschette oder -scheibe kann die Endform der Kunststoffmanschette oder -scheibe mit einfachen Mitteln mit einer abriebfesten Gleitschicht versehen werden. Eine material- und kostengünstige Herstellung der Manschette oder Scheibe wird mit einem in dem Zwischenraum angeordneten Einlegering in der Gießform erreicht. Damit können die beiden Polyurethane unterschiedlicher Zusammensetzung während der Formfüllung getrennt verbleiben und nach dem Entfernen des Einlegeringes in einem Übergangsbereich verschmelzen bzw. vernetzen. Der im Durchmesser variierbare Einlegering bildet in der Vorrichtung zwei Bereiche, so daß damit die Gleitzone im reibbelasteten Außenbereich optimal dimensioniert werden kann. Mit der Anordnung mehrerer Einlegeringe in der Gießform können mit einfachen Mitteln beidseitig verschleißfeste Kunststoffmanschetten oder -scheiben geschaffen werden, die unterschiedlichen Einsatzbedingungen anpaßbar sind.

Die Einzelheiten der Erfindung sind in der nachfolgenden Beschreibung in Verbindung mit der Zeichnung, die zwei Ausführungsbeispiele einer Vorrichtung erfindungsgemäßer Ausbildung schematisch veranschaulicht, näher erläutert. In der Zeichnung zeigen:

Fig. 1    eine schematische Draufsicht auf eine Kunststoffscheibe in einer Gießform,

Fig. 2    eine Vorrichtung zum Gießen einer Kunststoffscheibe im Schnitt I-I gemäß Fig. 1,

Fig. 3    eine Kunststoffmanschette in einer Gießform in der Draufsicht und

Fig. 4    einen Schnitt durch die Kunststoffmanschette gemäß Fig. 3 im Schnitt III-III.

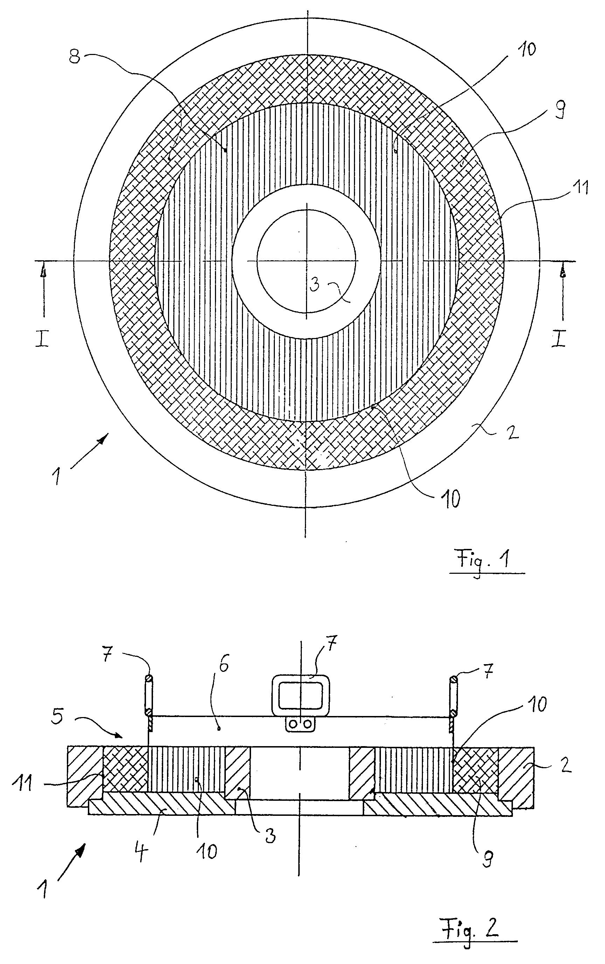

In Fig. 1 und 2 ist eine insgesamt mit 1 bezeichnete Gießform dargestellt, die von einem Außenring 2 und einem Innenring 3 gebildet ist, die sich an einer gemeinsamen Grundplatte 4 derart abstützen, daß ein nach unten flüssigkeitsdichter Zwischenraum 5 nach oben offen bleibt. In diesen Zwischenraum 5 wird zum Vergießen von Polyurethanphasen ein Einlegering 6 eingebracht, der sich im Moment des Vergießens der beiden Polyurethanphasen ebenso wie der Außenring 2 und der Innenring 3 auf der Grundplatte 4 abstützt. Durch ein Anheben des Einlegeringes 6 wird dessen Wirkung als Sperrelement aufgehoben.

Der Einlegering 6 ist mit Entnahmegriffen 7 versehen, die ein vertikales Anheben ermöglichen.

In einfachster Ausführung wird in der Gießform 1 in dem durch den Außenring 2 und den Innenring 3 gebildeten Zwischenraum 5 eine Kunststoffscheibe 8 vergossen, die als Ringelement für die Abstützung eines Molches dient, der in einem Rohr bewegt wird. Diese Kunststoffscheibe 8 setzt sich aus einem Außenbereich 9 und einem Innenbereich 10 zusammen. Der Außenbereich 9 ist in konkreter Ausführungsform ein mit Einlagerungen von Partikeln aus verfestigtem Polyäthylen bestehende Bereich, während der Innenbereich 10 aus Polyurethan ohne Zusatzstoffe besteht. Eine derart geformte Kunststoffscheibe 8 weist damit am Rand des Außenbereichs 9 eine umfangsseitige Gleitschicht 11 auf, deren Abriebfestigkeit und Gleiteigenschaften entscheidend von den Einlagerungen aus verfestigten Polyäthylenpartikeln beeinflußt sind. In einem Übergangsbereich 12, der zwischen dem Außenbereich 9 und dem Innenbereich 10 nach dem Anheben des Einlegeringes 6 gebildet ist, vermischen sich die beiden unterschiedlichen Polyurethanmaterialien, so daß eine stoffschlüssig homogene Kunststoffscheibe 8 der Gießform 1 entnehmbar ist.

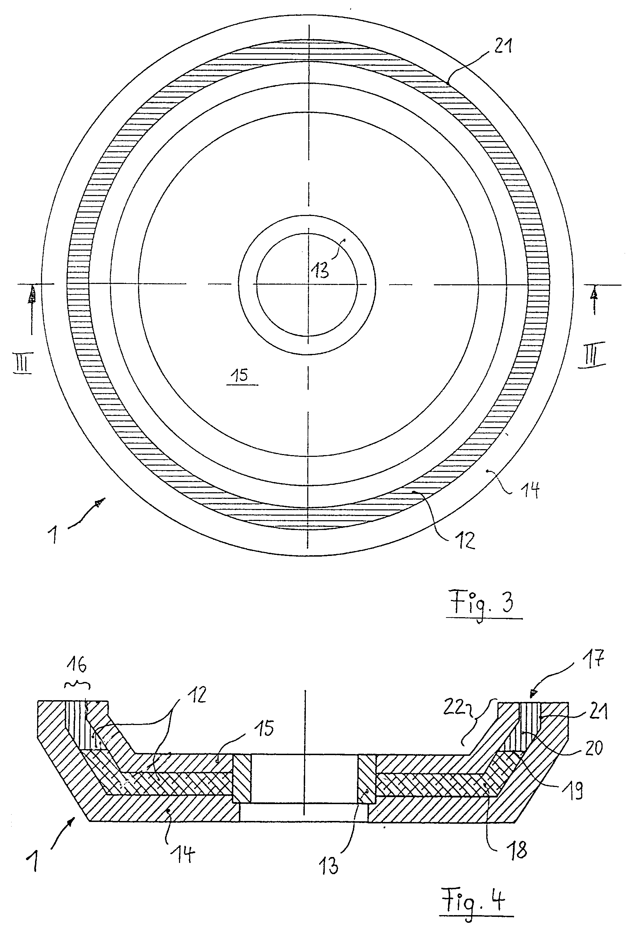

In Fig. 3 und 4 ist eine Gießform 1 zur Herstellung einer Kunststoffmanschette 12 dargestellt. Dabei stützen sich an einem Innenring 13 der Gießform 1 sowohl eine waagerechte Formplatte 14 als auch eine waagerechte Deckplatte 15 ab. Die Kunststoffmanschette 13 wird dabei in einem verbleibenden schalenförmigen Zwischenraum 16 dadurch ausgeformt, daß die unterschiedlichen Polyurethanmaterialien in diesen Zwischenraum 16 zwischen der Formplatte 14 und der Deckplatte 15 verfüllt werden. Das Polyurethan ohne Zusatz wird in der dargestellten Ausführungsform als erstes über eine Öffnung 17 eingefüllt und bildet einen Innenbereich 18, und danach wird das mit oberflächenverfestigten Polyäthylenpartikeln versetzte Polyurethan unter Schwerkraftwirkung eingebracht. Ohne zusätzliche Sperrelemente, die das vollständige Vermischen der beiden Polyurethanphasen verhindern, bildet der Gießspiegel einen Trennbereich, der gegebenenfalls bei ähnlichem Aufbau durch ein vertikales oder horizontales Trennblech (nicht dargestellt) erzeugt werden kann. Da in der dargestellten Ausführung auch das zuerst eingegossene Polyurethan die Gelzeit noch nicht erreicht hat, bildet sich an der Berührungsfläche ein Übergangsbereich 19 zwischen den beiden Polyurethanphasen und damit ist eine insgesamt homogene Kunststoffmanschette 12 gebildet, die für den Einsatz in einer Rohrleitung einen Außenbereich 20 mit verbesserten Festigkeitseigenschaften aufweist, dessen Gleitschicht 21 zuverlässig an der Rohrleitung anliegt, da die Kunststoffmanschette 12 mit einem vorspannungerzeugenden konischen Stülpteil 22 versehen ist.

Bei einer Ausführungsform (nicht dargestellt), in der der Innenring 13 zumindest teilweise entfernt oder mit Einspritzbohrungen versehen ist, ist eine gleichzeitige Verfüllung der Polyurethanmaterialien zwischen die waagerechte Formplatte 14 und die waagerechte Deckplatte 15 möglich, so daß die Produktivität der Herstellung von derartigen Kunststoffmanschetten weiter gesteigert werden kann.

**Patentansprüche**

1. Kunststoffmanschette oder -scheibe für Molche und dgl. in Rohrleitungen gleitend bewegliche Körper, im wesentlichen aus einem Polyurethan bestehend, **dadurch gekennzeichnet,** daß die Kunststoffmanschette oder -scheibe (8,12) zur Bildung einer abriebfesten Gleitschicht (11,21) zumindest in einem zur Anlage an die Rohrleitung bestimmten Außenbereich (9,20) Einlagerungen von Partikeln aus einem verfestigten Polyäthylen aufweist.

2. Kunststoffmanschette oder -scheibe, **dadurch gekennzeichnet,** daß die eingebrachten Partikel aus Polyäthylen in der Gleitschicht (11,21) eine Korngröße von 100 bis 500 Mikrometer aufweisen und in einer Menge von 10 bis 30 Volumenprozent beigemischt sind.

3. Kunststoffmanschette oder -scheibe nach Anspruch 1 oder 2, **dadurch gekennzeichnet,** daß die Partikel in der Gleitschicht (11,21) aus ultrahochmolekularem durch Oxidieren oberflächenverfestigtem Polyäthylen bestehen.

4. Kunststoffmanschette oder -scheibe nach einem der Ansprüche 1 bis 3, **dadurch gekennzeichnet,** daß die Gleitschicht (11,21) ringförmig ausgebildet ist.

5. Kunststoffmanschette oder -scheibe nach Anspruch 4, **dadurch gekennzeichnet,** daß die Kunststoffmanschette oder -scheibe (8,12) im Außenbereich (9,20) durchgehend über die volle Wandstärke Einlagerungen von Partikeln aus verfestigtem Polyäthylen aufweist.

6. Verfahren zur Herstellung einer Kunststoffmanschette oder -scheibe für Molche und dgl. in Rohrleitungen gleitend bewegliche Körper, die im wesentlichen aus Polyurethan erzeugt sind, indem das vernetzbare Material in eine Gießform eingebracht wird, **dadurch gekennzeichnet,** daß in einer Gießform zwei unterschiedliche Polyurethanmaterialien, von denen eines Einlagerungen von Partikeln aus einem verfestigtem Polyäthylen enthält und damit zumindest einen Außenbereich der Gießform füllt, vergossen werden.

7. Verfahren nach Anspruch 6, **dadurch gekennzeichnet,** daß das Vergießen der beiden Polyurethanmaterialien nacheinander erfolgt.

8. Verfahren nach Anspruch 7, **dadurch gekennzeichnet,** daß der Gießform zuerst ein Polyurethan zugegeben wird, welches keine Einlagerungen von Polyäthylenpartikeln aufweist und danach, bevor dieses Polyurethan seine Gelzeit erreicht, das Eingießen von mit oberflächenmodifizierten Polyäthylenpartikeln versetztem Polyurethan erfolgt.

9. Verfahren nach Anspruch 6, **dadurch gekennzeichnet,** daß das Vergießen der beiden Polyurethanmaterialien gleichzeitig erfolgt.

10. Verfahren nach Anspruch 9, **dadurch gekennzeichnet,** daß bis zur vollständigen Füllung der Gießform ein Vermischen der beiden Polyurethanmaterialien unterbunden wird.

11. Vorrichtung zur Herstellung einer Kunststoffmanschette oder -scheibe nach einem der Ansprüche 1 bis 5 mit einem eine Gießform bildenden Gießwerkzeug, **dadurch gekennzeichnet,** daß die Gießform (1) durch zumindest einen Einlegering (6) unterteilt ist.

12. Vorrichtung nach Anspruch 11, **dadurch gekennzeichnet,** daß der Einlegering (6) an der Grundplatte (4) der Gießform (1) bündig flüssigkeitsdicht abgestützt ist.

13. Vorrichtung nach Anspruch 11 und 12, **dadurch gekennzeichnet,** daß mehrere Einlegeringe (6) verwendet werden.

Fig. 1

Fig. 2

5

Fig. 3

Fig. 4

6

Europäisches Patentamt

# EUROPÄISCHER RECHERCHENBERICHT

Nummer der Anmeldung

EP 92 10 2288

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | US-A-4 077 080 (ROSS) <br> * Spalte 4, Zeile 21 - Zeile 40; Abbildung 5 * <br> --- | 1 | F16L55/26 |
| A | DE-A-2 304 188 (ARTHUR GUINESS SON&CO.) <br> * Seite 12, Zeile 4 - Zeile 13; Abbildungen 3,4 * <br> --- | 1 | |
| A | DE-U-8 908 714 (I.S.T. MOLCHTECHNIK) <br> ----- | | |

**RECHERCHIERTE SACHGEBIETE (Int. Cl.5)**

F16L
F17D
B08B

Der vorliegende Recherchenbericht wurde für alle Patentansprüche erstellt

| Recherchenort | Abschlußdatum der Recherche | Prüfer |
|---|---|---|
| BERLIN | 02 JUNI 1992 | SCHAEFFLER C.A.A. |

EPO FORM 1503 03.82 (P0403)